# EUROPEAN PATENT SPECIFICATION

(11) **EP 3 205 514 B1**
(45) Date of publication and mention of the grant of the patent: **23.06.2021**
(21) Application number: 17155155.9
(22) Date of filing: 08.02.2017
(51) Int. Cl.: B60C 1/00, C08L 9/06, C08L 9/00, C08K 3/36, C08K 3/04, C08L 25/16, C08L 93/00, C08L 93/04, C08L 45/02

(54) **RUBBER COMPOSITION AND TIRE WITH TREAD FOR LOW TEMPERATURE PERFORMANCE AND WET TRACTION**
GUMMIZUSAMMENSETZUNG UND REIFEN MIT LAUFFLÄCHE FÜR NIEDRIGTEMPERATURLEISTUNG UND NASSTRAKTION
COMPOSITION DE CAOUTCHOUC ET PNEU AYANT UNE BANDE DE ROULEMENT À PERFORMANCE BASSE TEMPÉRATURE ET TRACTION HUMIDE

(30) Priority: 15.02.2016 US 201615043773
(43) Date of publication of application: 16.08.2017
(73) Proprietor: The Goodyear Tire & Rubber Company, Akron, OH 44316 (US)
(72) Inventor: ISITMAN, Nihat Ali, Hudson, OH Ohio 44236 (US); STEINER, Pascal Patrick, L-9189 Vichten (LU); POMPEI, Manuela, L-9768 Reuler (LU); SCHMIT, Philippe, B-6742 Chantemelle (BE); THIELEN, Georges Marcel Victor, L-4995 Schouweiler (LU)
(74) Representative: Kutsch, Bernd

(56) References cited:
- EP-A1- 2 289 712
- EP-A1- 2 733 170
- WO-A1-2013/040425

## Description

### Field of the Invention

This invention relates to a rubber composition and to a tire with a tread of such a rubber composition for promoting a combination of winter performance and wet traction. For such purpose, the rubber composition contains a combination of relatively low surface area silica reinforcing filler and a relatively high softening point traction resin. Elastomers for the tread rubber composition comprise high cis 1,4-polybutadiene rubber and styrene/butadiene rubber.

### Background of the Invention

Tires are sometimes desired with treads for promoting traction on wet surfaces. Various rubber compositions may be proposed for such tire treads.

For example, tire tread rubber compositions which contain high molecular weight, high Tg (high glass transition temperature) diene based synthetic elastomer(s) might be desired for such purpose particularly for wet traction (traction of tire treads on wet road surfaces). Such tire tread may be desired where its reinforcing filler is primarily precipitated silica with its reinforcing filler therefore considered as being precipitated silica rich.

In one embodiment, the predictive wet traction performance for the tread rubber composition is based on a maximization of its tan delta physical property at -10°C.

For such purpose, it is desired to evaluate providing such tread rubber composition with a high Tg elastomer to promote wet traction for the tire tread where the rubber composition also has a lower stiffness physical property at lower temperatures to promote cold weather winter performance, particularly for vehicular snow driving.

In one embodiment, the predictive cold weather performance for the tread rubber composition is based on a minimization of its stiffness physical property at -20°C (e.g. minimized storage modulus G' at -20°C).

Therefore, it desirable to evaluate providing such vehicular tire tread with a rubber composition containing a combination of elastomers with high and intermediate glass transition temperatures (Tg's) to promote an optimized (maximized) tan delta property at -10°C (for predictive wet traction performance) combined with an optimized (minimized) stiffness property of a storage modulus (G') at -20°C (for predictive cold weather performance improvement).

It is considered that significant challenges are presented for providing such tire tread rubber compositions that provide a combination of both wet traction and winter performance. To achieve the challenge of providing such balance of tread rubber performances with tread rubber compositions, it is recognized that concessions and adjustments would be expected.

To meet such challenge, it is also desired to evaluate a rubber composition containing a combination of silica filler reinforcement, preferably precipitated silica filler reinforcement, and traction promoting resin comprising:
(A) a relatively high content of silica reinforcement comprising silicas, preferably precipitated silicas, of varying surface areas to evaluate their contribution for a traction promoting resin-containing tread, combined with
(B) traction promoting resins of varying softening points to evaluate their aid in promoting wet traction for the high silica reinforcement-containing tread.

In the description of this invention, the terms "compounded" rubber compositions and "compounds" are used to refer to rubber compositions which have been compounded, or blended, with appropriate rubber compounding ingredients. The terms "rubber" and "elastomer" may be used interchangeably unless otherwise indicated. The amounts of materials are usually expressed in parts of material per 100 parts of rubber by weight (phr).

The glass transition temperature (Tg) of the elastomers is determined by DSC (differential scanning calorimetry) measurements at a temperature rising rate of 10°C per minute, as would be understood and well known by one having skill in such art.

A softening point (Sp) of a resin is determined by ASTM E28 which may sometimes be known as a ring and ball softening point determination.

EP-A-2 733 170 describes a tire rubber composition containing a combination of resin and vegetable oil. The rubber composition is free of oil extended elastomer and further comprises a reinforcing filler comprising silica and/or carbon black and one or more elastomers.

EP-A-2 289 712 describes a tire comprising a rubber tread containing a combination of a resin blend and a functionalized elastomer. In detail, the rubber composition contains two styrene-butadiene rubbers with spaced apart glass transition temperatures, one of which is functionalized, and a combination of at least three resins with spaced apart softening points.

### Summary and Practice of the Invention

The invention relates to a rubber composition in accordance with claim 1 and to a pneumatic tire in accordance with claim 14.

Dependent claims refer to preferred embodiments of the invention.

In accordance with a preferred aspect of this invention, a pneumatic tire is provided having a circumferential rubber tread intended to be ground-contacting, where said tread is a rubber composition comprising, based on parts by weight per 100 parts by weight elastomer (phr):
(A) 100 phr of conjugated diene-based elastomers comprising:
   (1) 50 to 10 phr of a cis 1,4-polybutadiene rubber having a Tg in a range of from -90°C to -110°C and an isomeric cis 1,4-content of at least 95 percent,
   (2) 50 to 90 phr of styrene/butadiene elastomer having a Tg in a range of from -65°C to -55°C;
(B) 100 to 200, alternately from 120 to 180, phr of rubber reinforcing filler comprising a rubber reinforcing carbon black and silica, preferably precipitated silica (amorphous synthetic precipitated silica), having a nitrogen (BET) surface area of in a range of from 50 to 110, alternately from 80 to 100 m²/g, wherein the rubber reinforcing carbon black is present in an amount of from 2 to 15 phr, together with silica coupling agent for the silica or the precipitated silica having a moiety reactive with hydroxyl groups (e.g. silanol groups) on said silica and another different moiety interactive with said diene-based elastomers, and
(C) 30 to 70 phr of a traction promoting resin (e.g. traction between said tread and ground) having a softening point (Sp) in a range of from 110°C to 170°C comprising at least one of styrene-alphamethylstyrene copolymer resin having a softening point in a range of from 110°C to 130°C, terpene-phenol resin having a softening point in a range of from 120°C to 170°C, coumarone-indene resins having a softening point in a range of from 110°C to 170°C, petroleum hydrocarbon resins having a softening point in a range of from 110°C to 170°C, terpene polymer resins having a softening point in a range of from 110°C to 170°C and rosin derived resins and copolymers and copolymers having a softening point in a range of from 110°C to 170°C.

In one embodiment said traction promoting resin comprises at least one of said styrene-alphamethylstyrene resin and terpene-phenol resin.

In one embodiment, said styrene/butadiene elastomer has a styrene content in a range of from 10 to 50 percent.

In one embodiment, said styrene/butadiene has a vinyl 1,2-content based on its polybutadiene portion in a range of from 25 to 35 percent.

In one embodiment, said styrene/butadiene elastomer is an end-functionalized styrene/butadiene elastomer with functional groups reactive with hydroxyl groups on said silica or precipitated silica comprising alkoxy and at least one of primary amine and thiol groups (e.g. alkoxy and thiol groups) having a Tg in a range of from -65°C to - 55°C.

In further accordance with this invention, said rubber composition and said tire tread is provided as a sulfur cured rubber composition.

In one aspect of the invention, the silica or precipitated silica and the silica coupling agent may be pre-reacted to form a composite thereof prior to their addition to the rubber composition.

In another aspect of the invention, the silica or precipitated silica and the silica coupling agent may be added to the rubber composition and reacted together in situ within the rubber composition.

In one embodiment said tread rubber composition further contains up to 25, alternately up to 15, phr of at least one additional diene based elastomer. Such additional elastomer may comprise, for example, at least one of cis 1,4-polyisoprene (natural rubber or synthetic), and copolymers of isoprene and butadiene.

The silica or precipitated silica reinforcement, as indicated, may, for example, be characterized by having a BET surface area, as measured using nitrogen gas, in the range of 50 to 110, alternately from 80 to 100, square meters per gram. The BET method of measuring surface area might be described, for example, in the Journal of the American Chemical Society, (1938),Volume 60, as well as ASTM D3037.

Representative examples of rubber reinforcing carbon blacks are, for example, and not intended to be limiting, as referenced in The Vanderbilt Rubber Handbook, 13th edition, year 1990, on Pages 417 and 418 with their ASTM designations. Such rubber reinforcing carbon blacks may have iodine absorptions ranging from, for example, 60 to 240 g/kg and DBP values ranging from 34 to 150 cc/100 g.

Representative of silica coupling agents for the silica or precipitated silica comprise, for example:
(A) bis(3-trialkoxysilylalkyl) polysulfide containing an average in range of from 2 to 4, alternatively from 2 to 2.6 or from 3.2 to 3.8, sulfur atoms in its polysulfide connecting bridge, or
(B) an organoalkoxymercaptosilane, or
(C) their combination.

Representative of such bis(3-trialkoxysilylalkyl) polysulfide comprises bis(3-triethoxysilylpropyl) polysulfide.

In one embodiment, the styrene/alphamethylstyrene traction promoting resin is, for example, a relatively short chain copolymer of styrene and alphamethylstyrene. In one embodiment, such a resin may be suitably prepared, for example, by cationic copolymerization of styrene and alphamethylstyrene in a hydrocarbon solvent. The styrene/alphamethylstyrene resin may have, for example, a styrene content in a range of from 10 to 90 percent. The styrene/alphamethylstyrene resin may have a softening point, for example, in a range of from 110°C to 150°C, alternately from 110°C to 130°C. An exemplary styrene/alphamethylstyrene resin may be used is, for example, Norsolene™ W120 from Cray Valley.

In one embodiment, the resin is a terpene-phenol resin. Such terpene-phenol resin may be, for example, a copolymer of phenolic monomer with a terpene such as, for example, limonene and pinene. The terpene-phenol resin may have a softening point, for example, in a range of from 110°C to 170°C, alternately from 140°C to 150°C. An exemplary terpene-phenol resin is, for example YS Polyster T145 from Yasuhara Chemical Co.

In one embodiment the resin is a coumarone-indene resin. Such coumarone-indene resin may have a softening point, for example, in a range of from 110°C to 170°C, alternately from 110°C to 150°C, containing coumarone and indene as the monomer components making up the resin skeleton (main chain). Minor amounts of monomers other than coumarone and indene may be incorporated into the skeleton such as, for example, methyl coumarone, styrene, alphamethylstyrene, methylindene, vinyltoluene, dicyclopentadiene, cycopentadiene, and diolefins such as isoprene and piperlyene.

In one embodiment, the resin is a petroleum hydrocarbon resin having a softening point (Sp) in a range of, for example, in a range of from 110°C to 170°C. Such petroleum hydrocarbon resin may be, for example, an aromatic and/or nonaromatic (e.g. paraffinic) based resin. Various petroleum resins are available. Some petroleum hydrocarbon resins have a low degree of unsaturation and high aromatic content, whereas some are highly unsaturated and yet some contain no aromatic structure at all. Differences in the resins are largely due to the olefins contained in the petroleum based feedstock from which the resins are derived. Conventional olefins for such resins include any C5 olefins (olefins and diolefines containing an average of five carbon atoms) such as, for example, cyclopentadiene, dicyclopentadiene, isoprene and piperylene, and any C9 olefins (olefins and diolefins containing an average of 9 carbon atoms) such as, for example, vinyltoluene and alphamethylstyrene. Such resins may be made from mixtures of such C5 and C9 olefins.

In one embodiment, said resin is a terpene resin. Such resin may comprise, for example, polymers of at least one of limonene, alpha pinene and beta pinene and having a softening point in a range of, for example, from 110°C to 170°C, alternately from 110°C to 160°C.

In one embodiment, the resin is a terpene-phenol resin having a softening point of, for example, in a range of from 120°C to 170°C, alternately from 120°C to 150°C. Such terpene-phenol resin may be, for example, a copolymer of phenolic monomer with a terpene such as, for example, limonene and pinene.

In one embodiment, the resin is a resin derived from rosin and derivatives having a softening point (Sp), for example, in a range of from 110°C to 170°C. Representative thereof are, for example, gum rosin and wood rosin. Gum rosin and wood rosin have similar compositions, although the amount of components of the rosins may vary. Such resins may be in the form of esters of rosin acids and polyols such as pentaerythritol or glycol. In one embodiment, said resin may be at least partially hydrogenated (which may be fully hydrogenated).

It is readily understood by those having skill in the art that the vulcanizable rubber composition would be compounded by methods generally known in the rubber compounding art. In addition, said compositions could also contain fatty acid, zinc oxide, waxes, antioxidants, antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. Usually it is desired that the sulfur-vulcanizing agent is elemental sulfur. The sulfur-vulcanizing agent may be used in an amount ranging, for example, from 0.5 to 8 phr, with a range of from 1.2 to 6 phr being often more desirable. Typical amounts of processing aids for the rubber composition, where used, may comprise, for example, from 1 to 10 phr. Typical processing aids may be, for example, at least one of various fatty acids (e.g. at least one of palmitic, stearic and oleic acids) or fatty acid salts.

Rubber processing oils may be used, where desired, in an amount of, for example, from 10 up to 100, alternately from 15 to 45 phr, to aid in processing the uncured rubber composition. The processing oil used may include both extending oil present in the elastomers and process oil added during compounding. Suitable process oils include various petroleum based oils as are known in the art, including aromatic, paraffinic, naphthenic, and low PCA oils, such as MES, TDAE, and heavy naphthenic oils, and various triglyceride based vegetable oils such as sunflower, soybean, and safflower oils, particularly soybean oil.

Typical amounts of antioxidants may comprise, for example, 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants may comprise, for example, 1 to 5 phr. Typical amounts of fatty acids, if used, which can include stearic acid comprise 0.5 to 5 phr. Typical amounts of zinc oxide may comprise, for example, 2 to 5 phr. Typical amounts of waxes comprise 1 to 5 phr. Often microcrystalline waxes are used. Typical amounts of peptizers, when used, may be used in amounts of, for example, 0.1 to 1 phr. Typical peptizers may be, for example, pentachlorothiophenol and dibenzamidodiphenyl disulfide.

Sulfur vulcanization accelerators are used to control the time and/or temperature required for vulcanization and to improve the properties of the vulcanizate. In one embodiment, a single accelerator system may be used, i.e., primary accelerator. The primary accelerator(s) may be used in total amounts ranging, for example, from 0.5 to 4, sometimes desirably 0.8 to 2.5, phr. In another embodiment, combinations of a primary and a secondary accelerator might be used with the secondary accelerator being used in smaller amounts, such as, for example, from 0.05 to 4 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, sulfenamides, and xanthates. Often desirably the primary accelerator is a sulfenamide. If a second accelerator is used, the secondary accelerator is often desirably a guanidine such as for example a diphenylguanidine.

The mixing of the vulcanizable rubber composition can be accomplished by methods known to those having skill in the rubber mixing art. For example, the ingredients are typically mixed in at least two stages, namely at least one non-productive stage followed by a productive mix stage. The final curatives, including sulfur-vulcanizing agents, are typically mixed in the final stage, which is conventionally called the "productive" mix stage, in which the mixing typically occurs at a temperature, or ultimate temperature, lower than the mix temperature(s) of the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C, alternately in a range of between 140°C to 170°C. The appropriate duration of the thermomechanical working varies as a function of the operating conditions and the volume and nature of the components. For example, the thermomechanical working may be in a range of from 1 to 20, alternately from 4 to 8, minutes.

The pneumatic tire of the present invention may be, for example, a passenger tire, truck tire, a race tire, aircraft tire, agricultural tire, earthmover tire and off-the-road tire. Usually desirably the tire is a passenger or truck tire. The tire may also be a radial or bias ply tire, with a radial ply tire being usually desired.

Vulcanization of the pneumatic tire containing the tire tread of the present invention is generally carried out at conventional temperatures in a range of, for example, from 140°C to 200°C. Often it is desired that the vulcanization is conducted at temperatures ranging from 150°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The following example is presented for the purposes of illustrating and not limiting the present invention. The parts and percentages are parts by weight, usually parts by weight per 100 parts by weight rubber (phr) unless otherwise indicated.

### EXAMPLE I

In this example, exemplary rubber compositions for a tire tread were prepared for evaluation for use to promote a combination of wet traction and cold weather (winter) performance.

A control rubber composition was prepared identified as rubber Sample A, Sample B and Sample C, and experimental rubber compositions identified as rubber Samples D and E were prepared as precipitated silica reinforced rubber compositions containing synthetic elastomers as a combination of styrene/butadiene rubber having an intermediate Tg of -60°C and a cis 1,4-polybutadiene rubber having a low Tg of - 106°C together with traction resin and silica coupler for the precipitated silica.

The rubber compositions are illustrated in the following Table 1.

**Table 1**

| Material | Parts by Weight (phr) | | | | |
|---|---|---|---|---|---|
| Non-Productive Mixing (NP) | Cntrl A | Cntrl B | Cntrl C | Exp D | Exp. E |
| Cis 1,4-polybutdiene rubber¹ | 25 | 25 | 25 | 25 | 25 |
| Styrene/butadiene rubber² | 75 | 75 | 75 | 75 | 75 |
| Traction resin A³ | 36 | 36 | 36 | 0 | 0 |
| Traction resin B⁴ | 0 | 0 | 0 | 37 | 0 |
| Traction resin C⁵ | 0 | 0 | 0 | 0 | 47 |
| Rubber processing oil⁶ | 26 | 15 | 23 | 23 | 16 |
| Precipitated silica X⁷ | 140 | 0 | 0 | 0 | 0 |
| Precipitated silica Y⁸ | 0 | 140 | 160 | 160 | 160 |
| Silica coupler⁹ | 8.8 | 6.3 | 7.2 | 7.2 | 7.2 |
| Fatty acids¹⁰ | 5 | 5 | 5 | 5 | 5 |
| Carbon black (N330) | 1 | 1 | 1 | 1 | 1 |
| Wax (paraffinic and microcrystalline) | 1.5 | 1.5 | 1.5 | 1.5 | 1.5 |
| Antioxidant(s) | 5 | 5 | 5 | 5 | 5 |
| Zinc oxide | 2.5 | 2.5 | 2.5 | 2.5 | 2.5 |

| Productive Mixing (P) | | | | | |
|---|---|---|---|---|---|
| Sulfur | 1.2 | 1.5 | 1.5 | 1.5 | 1.2 |
| Sulfur cure accelerators¹¹ | 5.5 | 3.8 | 4.4 | 4.7 | 5.1 |

| | | | | | |
|---|---|---|---|---|---|
| ¹High cis 1,4-polybutadiene rubber as Budene1229™ from The Goodyear Tire & Rubber Company having a Tg of -106°C having a vinyl 1,2-content of less than 4 percent and a cis 1,4-content of more than 96 percent ²Styrene/butadiene rubber (SSBR) prepared by organic solution prepared polymerization of styrene and 1,3-butadiene monomers having a styrene content of 15 percent and a vinyl 1,2-content of 30 percent (based on the polybutadiene portion of the SSBR) with a Tg of -60°C obtained as Sprintan SLR 3402™ from Trinseo. The SSBR was a functionalized SSBR end functionalized with functional groups understood to comprise alkoxy and thiol groups. ³Traction resin A as copolymer of styrene and alphamethylstyrene (styrene-alphamethylstyrene copolymer) having a softening point of 80°C to 90°C obtained as Sylvares SA85™ from Arizona Chemicals ⁴Traction resin B as copolymer of styrene and alphamethylstyrene (styrene-alphamethylstyrene copolymer) having a softening point of 110°C to 130°C obtained as Norsolene W120™ from Total Petrochemicals ⁵Traction resin C as copolymer of terpene and phenol having a softening point of 140°C to 150°C obtained as YS Polyster T145™ from Yasuhara Chemical ⁶Rubber processing oil as a TDAE type petroleum based oil ⁷Precipitated silica X as HiSil315G-D™ from PPG having a BET (nitrogen) surface area of 125 m²/g ⁸Precipitated silica Y as EZ090G-D™ from PPG having a BET (nitrogen) surface area of 90 m²/g ⁹Silica coupler comprising a bis(3-triethoxysilylpropyl) polysulfide containing an average in a range of from 2 to 2.6 connecting sulfur atoms in its polysulfidic bridge as Si266™ from Evonik ¹⁰Fatty acids comprising stearic, palmitic and/or oleic acids ¹¹Sulfur cure accelerators as sulfenamide primary accelerator and diphenylguanidine secondary accelerator | | | | | |

The rubber Samples were prepared by blending the ingredients, other than the sulfur curatives, in a first non-productive mixing stage (NP1) in an internal rubber mixer for 4 minutes to a temperature of 160°C. The resulting mixtures were subsequently individually mixed in a second sequential non-productive mixing stage (NP2) in an internal rubber mixer to a temperature of 140°C. The rubber compositions were subsequently mixed in a productive mixing stage (P) in an internal rubber mixer with the sulfur curatives comprising the sulfur and sulfur cure accelerators for 2 minutes to a temperature of 115°C. The rubber compositions were each removed from the internal mixer after each mixing step and cooled to below 40°C between each individual non-productive mixing stage and before the final productive mixing stage.

The following Table 2 illustrates various physical properties of rubber compositions based upon the basic formulation of Table 1 and reported herein as Control rubber Samples A, B and C, and Experimental rubber Samples D and E. Where cured rubber samples are reported, such as for the stress-strain, hot rebound and hardness values, the rubber samples were cured for 10 minutes at a temperature of 170°C.

For the predictive wet traction, a tangent delta (tan delta) test was run at -10°C.

For the predictive low temperature (winter snow) performance, the rubber's stiffness test (storage modulus G') was run at -20°C to provide a stiffness value of the compounds (rubber compositions) at lower operating temperatures.

**Table 2**

| | Parts by Weight (phr) | | | | |
|---|---|---|---|---|---|
| Materials | Cntrl A | Cntrl B | Cntrl C | Exp D | Exp E |
| Traction resin A | 36 | 36 | 36 | 0 | 0 |
| Traction resin B | 0 | 0 | 0 | 37 | 0 |
| Traction resin C | 0 | 0 | 0 | 0 | 47 |
| Precipitated silica X | 140 | 0 | 0 | 0 | 0 |
| Precipitated silica Y | 0 | 140 | 160 | 160 | 160 |

| Properties | | | | | |
|---|---|---|---|---|---|
| Cold Weather (Winter) Performance (Stiffness) Laboratory Prediction | | | | | |
| Storage modulus (G'), (MPa) at -20°C, 7.8 Hertz, 1.5% strain (lower stiffness values are better) | 17 | 11 | 15 | 14 | 16 |

| Wet Traction Laboratory Prediction | | | | | |
|---|---|---|---|---|---|
| Tan delta, (-10°C) (higher values are better) | 0.54 | 0.48 | 0.53 | 0.55 | 0.63 |

| Additional properties | | | | | |
|---|---|---|---|---|---|
| Tensile strength (MPa) | 15 | 12 | 11 | 12 | 12 |
| Elongation at break (%) | 529 | 462 | 479 | 475 | 508 |
| Modulus (ring) 300% (MPa) | 7.6 | 7.8 | 7.3 | 8 | 7.1 |
| Shore A hardness (100°C) | 61 | 60 | 60 | 60 | 60 |
| Storage modulus G', (MPa) at 100°C, and 1% strain | 2.8 | 2.2 | 2.7 | 2.3 | 2.1 |

| Rolling Resistance Predictive Property | | | | | |
|---|---|---|---|---|---|
| Tan delta, 50°C (lower is better) | 0.27 | 0.19 | 0.22 | 0.27 | 0.26 |

### Observations from Table 2

### Wet Traction - Tan Delta (-10°C) and Cold Weather Performance - G' (-20°C) Considerations

### (A) Use of Precipitated Silica of Lower Surface Area

Control rubber Samples B and C used the same levels of the same traction resin (styrene-alphamethylstyrene copolymer) as Control rubber Sample A, although a precipitated silica having a substantially lower surface area was used (BET nitrogen surface area of 90 instead of a BET surface area of 125 m²/g for the precipitated silica of Control rubber Sample A).

Rolling resistance prediction property for a tire with tread of the respective rubber compositions (evidenced by the tan delta at 50°C) was beneficially improved or maintained in a sense that the tan delta values were beneficially reduced for Control rubber Samples B and C and maintained for Experimental rubber Samples D and E.

Simultaneously, winter (low temperature) properties for Control rubber Samples B and C were improved (while also improving the aforesaid predictive rolling resistance) as evidenced by desirably reduced storage moduli G' at -20°C.

However, wet traction predictive properties for Control rubber Samples B and C were reduced in a sense that the tan delta at -10°C values were undesirably reduced as compared to Control rubber Sample A.

### (B) Use of Traction Resins with Higher Softening Points

Experimental rubber Samples D and E used the same lower surface area precipitated silica as Control rubber Samples B and C (BET nitrogen surface area of 90 instead of a BET surface area of 125 m²/g for the precipitated silica of Control rubber Sample A).

However, Experimental rubber Samples D and E both used significantly higher softening point traction resins (120°C and 145°C, respectively) than the traction resin used for rubber Sample A and for Control rubber Samples B and C having a substantially lower softening point of 85°C.

In particular, Experimental rubber Sample D used a styrene-alphamethylstyrene copolymer having a softening point of 120°C and Experimental rubber Sample E used a terpene/phenol copolymer having a softening point of 145°C.

It is concluded that Experimental rubber Samples D and E, with a combination of high levels of low surface area precipitated silica together with high softening point traction promoting resins, provided better wet traction properties as compared to Control rubber Sample A. Simultaneously, an unpredicted and therefore discovered, predictive improvement in winter (low temperature) properties of Experimental rubber Samples D and E are obtained over the Control rubber sample A.

It is further concluded that the rolling resistance predictive property of Experimental rubber Samples D and E are beneficially maintained compared to the Control rubber Sample A.

## Claims

1. A rubber composition for use in a tire tread, the rubber composition comprising, based on parts by weight per 100 parts by weight elastomer (phr):
(A) 100 phr of conjugated diene-based elastomers comprising:
(1) of from 50 phr to 10 phr of a cis 1,4-polybutadiene rubber having a Tg in a range of from -90°C to -110°C and an isomeric cis 1,4-content of at least 95 percent;
(2) of from 50 to 90 phr of styrene/butadiene elastomer having a Tg in a range of from -65°C to -55°C;
(B) 100 to 200 phr of a rubber reinforcing filler comprising carbon black and silica having a nitrogen surface area of in a range of from 50 to 110 m²/g, wherein the carbon black is present in an amount of from 2 to 15 phr, together with a silica coupling agent for the silica having a moiety reactive with hydroxyl groups on the silica and another different moiety interactive with the diene-based elastomers; and
(C) of from 30 to 70 phr of a traction promoting resin having a softening point (Sp) in a range of from 110°C to 170°C comprising at least one of a styrene-alphamethylstyrene copolymer resin having a softening point in a range of from 110°C to 130°C, a terpene-phenol resin having a softening point in a range of from 120°C to 170°C, one or more coumarone-indene resins having a softening point in a range of from 110°C to 170°C, one or more petroleum hydrocarbon resins having a softening point in a range of from 110°C to 170°C, one or more terpene polymer resins having a softening point in a range of from 110°C to 170°C and one or more rosin derived resins and copolymers and copolymers having a softening point in a range of from 110°C to 170°C.

2. The rubber composition of claim 1 wherein the traction promoting resin comprises at least one of the styrene-alphamethylstyrene resin and terpene-phenol resin, particularly the styrene-alphamethylstyrene resin.

3. The rubber composition of claim 1 or 2 wherein said styrene/butadiene elastomer has a styrene content in a range of from 10 to 20 percent.

4. The rubber composition of at least one of the previous claims wherein the styrene/butadiene has a vinyl 1,2-content based on its polybutadiene portion in a range of from 25 to 35 percent.

5. The rubber composition of at least one of the previous claims wherein the styrene/butadiene elastomer has a styrene content in a range of from 10 to 20 percent and a vinyl 1,2-content based on its polybutadiene portion in a range of from 25 to 35 percent.

6. The rubber composition of at least one of the previous claims wherein the styrene/butadiene elastomer is an end-functionalized styrene/butadiene elastomer with functional groups reactive with hydroxyl groups on the silica comprising alkoxy and at least one of primary amine and thiol groups.

7. The rubber composition of at least one of the previous claims wherein the styrene/butadiene elastomer is an end-functionalized styrene/butadiene elastomer with functional groups comprising alkoxy and thiol groups.

8. The rubber composition of at least one of the previous claims wherein the silica coupling agent comprises:
(A) a bis(3-trialkoxysilylalkyl) polysulfide containing an average in range of from 2 to 4 sulfur atom in its polysulfide connecting bridge, or
(B) an organoalkoxymercaptosilane, or
(C) their combination.

9. The rubber composition of at least one of the previous claims wherein the silica coupling agent comprises a bis(3-triethoxysilylpropyl) polysulfide, preferably a bis(3-triethoxysilylpropyl) polysulfide containing an average of from 2 to 2.6 sulfur atoms in its polysulfidic bridge.

10. The rubber composition of at least one of the previous claims wherein the traction promoting resin is the coumarone-indene resin.

11. The rubber composition of at least one of the previous claims 1 to 9 wherein the traction promoting resin is the petroleum hydrocarbon resin.

12. The rubber composition of at least one of the previous claims 1 to 9 wherein the traction promoting resin is the terpene polymer resin.

13. The rubber composition of at least one of the previous claims wherein the traction promoting resin is the rosin derived resin, and, optionally, wherein the rosin derived resin is at least partially hydrogenated.

14. A pneumatic tire having a circumferential rubber tread intended to be ground-contacting, where said tread consists of or comprises a rubber composition in accordance with at least one of the previous claims.

15. The tire of claim 14 wherein the tread rubber composition is sulfur cured.

## Patentansprüche

1. Kautschukzusammensetzung zur Verwendung in einer Reifenlauffläche, wobei die Kautschukzusammensetzung, basierend auf Gewichtsteilen pro 100 Gewichtsteilen Elastomer (phr), Folgendes umfasst:
(A) 100 phr konjugierte Elastomere auf Dienbasis, die Folgendes umfassen:
(1) von 50 phr bis 10 phr eines cis-1,4-Polybutadienkautschuks, der eine Tg in einem Bereich von -90 °C bis -110 °C und einen isomeren cis-1,4-Gehalt von wenigstens 95 Prozent aufweist;
(2) von 50 bis 90 phr eines Styrol-/Butadienelastomer, das eine Tg in einem Bereich von -65 °C bis -55 °C aufweist;
(B) 100 bis 200 phr eines kautschukverstärkenden Füllstoffs, der Industrieruß und Siliciumdioxid umfasst, der eine Stickstoffoberflächenregion in einem Bereich von 50 bis 110 m²/g aufweist, wobei der Industrieruß in einer Menge von 2 bis 15 phr vorhanden ist, zusammen mit einem Siliciumdioxidhaftvermittler für das Siliciumdioxid, der ein Molekülteil, das mit Hydroxylgruppen an dem Siliciumdioxid reaktiv ist, und ein anderes unterschiedliches Molekülteil aufweist, das mit den Elastomeren auf Dienbasis wechselwirkend ist; und
(C) von 30 bis 70 phr eines traktionsfördernden Harzes, das einen Erweichungspunkt (*softening point* - Sp) in einem Bereich von 110 °C bis 170 °C aufweist, das Folgendes umfasst: ein Styrol-Alphamethylstyrolcopolymerharz, das einen Erweichungspunkt in einem Bereich von 110 °C bis 130 °C aufweist, ein Terpenphenolharz, das einen Erweichungspunkt in einem Bereich von 120 °C bis 170 °C aufweist, ein oder mehrere Cumaronindenharze, die einen Erweichungspunkt in einem Bereich von 110 °C bis 170 °C aufweisen, ein oder mehrere Erdölkohlenwasserstoffharze, die einen Erweichungspunkt in einem Bereich von 110 °C bis 170 °C aufweisen, ein oder mehrere Terpenpolymerharze, die einen Erweichungspunkt in einem Bereich von 110 °C bis 170 °C aufweisen, und ein oder mehrere Harze, die von Kolophonium abgeleitet sind, und Copolymere und/oder Copolymere, die einen Erweichungspunkt in einem Bereich von 110 °C bis 170 °C aufweisen.

2. Kautschukzusammensetzung nach Anspruch 1, wobei das traktionsfördernde Harz das Styrol-Alphamethylstyrolharz und/oder das Terpenphenolharz umfasst, insbesondere das Styrol-Alphamethylstyrolharz.

3. Kautschukzusammensetzung nach Anspruch 1 oder 2, wobei das Styrol-/Butadienelastomer einen Styrolgehalt in einem Bereich von 10 bis 20 Prozent aufweist.

4. Kautschukzusammensetzung nach wenigstens einem der vorhergehenden Ansprüche, wobei das Styrol/Butadien einen Vinyl-1,2-Gehalt basierend auf seinem Polybutadienanteil in einem Bereich von 25 bis 35 Prozent aufweist.

5. Kautschukzusammensetzung nach wenigstens einem der vorhergehenden Ansprüche, wobei das Styrol-/Butadienelastomer einen Styrolgehalt in einem Bereich von 10 bis 20 Prozent und einen Vinyl-1,2-Gehalt basierend auf seinem Polybutadienanteil in einem Bereich von 25 bis 35 Prozent aufweist.

6. Kautschukzusammensetzung nach wenigstens einem der vorhergehenden Ansprüche, wobei das Styrol-/Butadienelastomer ein endfunktionalisiertes Styrol-/Butadienelastomer mit funktionellen Gruppen ist, die mit Hydroxylgruppen an dem Siliciumdioxid reaktiv sind, die Alkoxy- und primäre Amin- und/oder Thiolgruppen umfassen.

7. Kautschukzusammensetzung nach wenigstens einem der vorhergehenden Ansprüche, wobei das Styrol-/Butadienelastomer ein endfunktionalisiertes Styrol-/Butadienelastomer mit funktionellen Gruppen ist, die Alkoxy- und Thiolgruppen umfassen.

8. Kautschukzusammensetzung nach wenigstens einem der vorhergehenden Ansprüche, wobei der Siliciumdioxidhaftvermittler Folgendes umfasst:
(A) ein Bis(3-trialkoxysilylalkyl)polysulfid, das einen Durchschnitt in dem Bereich von 2 bis 4 Schwefelatomen in seiner Polysulfid verbindenden Brücke enthält, oder
(B) ein Organoalkoxymercaptosilan; oder
(C) ihre Kombination.

9. Kautschukzusammensetzung nach wenigstens einem der vorhergehenden Ansprüche, wobei der Siliciumdioxidhaftvermittler ein Bis(3-triethoxysilylpropyl)polysulfid umfasst, vorzugsweise ein Bis(3-triethoxysilylpropyl)polysulfid, das einen Durchschnitt von 2 bis 2,6 Schwefelatomen in seiner Polysulfidbrücke enthält.

10. Kautschukzusammensetzung nach wenigstens einem der vorhergehenden Ansprüche, wobei das traktionsfördernde Harz das Cumaronindenharz ist.

11. Kautschukzusammensetzung nach wenigstens einem der vorhergehenden Ansprüche 1 bis 9, wobei das traktionsfördernde Harz das Erdölkohlenwasserstoffharz ist.

12. Kautschukzusammensetzung nach wenigstens einem der vorhergehenden Ansprüche 1 bis 9, wobei das traktionsfördernde Harz das Terpenpolymerharz ist.

13. Kautschukzusammensetzung nach wenigstens einem der vorhergehenden Ansprüche, wobei das traktionsfördernde Harz das Harz ist, das von Kolophonium abgeleitet ist, und optional wobei das Harz, das von Kolophonium abgeleitet ist, wenigstens teilweise hydriert ist.

14. Luftreifen, der eine Umfangskautschuklauffläche aufweist, die vorgesehen ist, den Boden zu berühren, wobei die Lauffläche aus einer Kautschukzusammensetzung nach wenigstens einem der vorhergehenden Ansprüche besteht oder diese umfasst.

15. Reifen nach Anspruch 14, wobei die Laufflächenkautschukzusammensetzung schwefelgehärtet ist.

## Revendications

1. Composition de caoutchouc pour son utilisation dans une bande de roulement de bandage pneumatique, la composition de caoutchouc comprenant, en se basant sur des parties en poids par 100 parties en poids d'élastomère (phr) :
(A) 100 phr d'élastomères à base de diènes conjugués, qui comprennent :
(1) de 50 phr à 10 phr d'un caoutchouc de cis-1,4-polybutadiène qui possède une température de transition vitreuse (Tg) dans une plage de -90 °C à -110 °C et une teneur en isomère cis en 1,4 qui s'élève à au moins 95 % ;
(2) de 50 à 90 phr d'un élastomère de styrène/butadiène qui possède une valeur Tg dans une plage de -65 °C à -55 °C ;
(B) de 100 à 200 phr d'une matière de charge pour le renforcement du caoutchouc, qui comprend du noir de carbone et de la silice qui possède une surface spécifique par adsorption d'azote dans une plage de 50 à 110 m²/g, dans laquelle le noir de carbone est présent en une quantité de 2 à 15 phr, de manière conjointe avec un agent de couplage pour la silice qui possède une fraction apte à réagir avec des groupes hydroxyle sur la silice et une autre fraction différente qui entre en interaction avec les élastomères à base de diènes conjugués ; et
(C) de 30 à 70 phr d'une résine qui favorise la traction, qui possède un point de ramollissement (Sp) dans une plage de 110 °C à 170 °C, qui comprend au moins une résine qui est choisie parmi une résine de copolymère de styrène-alphaméthylstyrène qui possède un point de ramollissement dans une plage de 110 °C à 130 °C, une résine de terpène-phénol qui possède un point de ramollissement dans une plage de 120 °C à 170 °C, une ou plusieurs résines de coumarone-indène qui possèdent un point de ramollissement dans une plage de 110 °C à 170 °C, une ou plusieurs résines d'hydrocarbure de pétrole qui possèdent un point de ramollissement dans une plage de 110 °C à 170°C, une ou plusieurs résines polymères terpéniques qui possèdent un point de ramollissement dans une plage de 110 °C à 170 °C et une ou plusieurs résines qui dérivent du colophane ainsi que des copolymères et des copolymères qui possèdent un point de ramollissement dans une plage de 110 °C à 170 °C.

2. Composition de caoutchouc selon la revendication 1, dans laquelle la résine qui favorise la traction comprend au moins une résine choisie parmi la résine de styrène-alphaméthylstyrène représente la résine de terpène-phénol, en particulier la résine de styrène-alphaméthylstyrène.

3. Composition de caoutchouc selon la revendication 1 ou 2, dans laquelle ledit élastomère de styrène/butadiène possède une teneur en styrène dans une plage de 10 à 20 %.

4. Composition de caoutchouc selon au moins une des revendications précédentes, dans laquelle l'élastomère de styrène/butadiène possède une teneur en unités vinyle en 1,2, en se basant sur sa portion de polybutadiène, dans une plage de 25 à 35 %.

5. Composition de caoutchouc selon au moins une des revendications précédentes, dans laquelle l'élastomère de styrène/butadiène possède une teneur en styrène dans une plage de 10 à 20 % et une teneur en unités vinyle en 1,2, en se basant sur sa portion de polybutadiène, dans une plage de 25 à 35 %.

6. Composition de caoutchouc selon au moins une des revendications précédentes, dans laquelle l'élastomère de styrène/butadiène représente un élastomère de styrène/butadiène dont les extrémités ont fonctionnalisées, qui comprend des groupes fonctionnels aptes à réagir avec des groupes hydroxyle sur la silice, comprenant des groupes alcoxy et au moins un groupe choisi parmi un groupe d'amine primaire et un groupe thiol.

7. Composition de caoutchouc selon au moins une des revendications précédentes, dans laquelle l'élastomère de styrène/butadiène représente un élastomère de styrène/butadiène dont les extrémités ont été fonctionnalisées, qui comprend des groupes fonctionnels comprenant des groupes alcoxy et des groupes thiol.

8. Composition de caoutchouc selon au moins une des revendications précédentes, dans laquelle l'agent de couplage pour la silice comprend :
(A) un bis(3-trialcoxysilylalkyl) polysulfure qui contient une moyenne dans la plage de 2 à 4 atomes de soufre dans son pont de liaison de polysulfure ; ou
(B) un organoalcoxymercaptosilane ; ou
(C) leurs combinaisons.

9. Composition de caoutchouc selon au moins une des revendications précédentes, dans laquelle l'agent de couplage pour la silice comprend un bis(3-triéthoxysilylalkyl) polysulfure, de préférence un bis(3-triéthoxysilylpropyl) polysulfure qui contient une moyenne de 2 à 2,6 atomes de soufre dans son pont de polysulfure.

10. Composition de caoutchouc selon au moins une des revendications précédentes, dans laquelle la résine qui favorise la traction représente la résine de coumarone-indène.

11. Composition de caoutchouc selon au moins une des revendications 1 à 9, dans laquelle la résine qui favorise la traction représente la résine d'hydrocarbure de pétrole.

12. Composition de caoutchouc selon au moins une des revendications 1 à 9, dans laquelle la résine qui favorise la traction représente la résine polymère terpénique.

13. Composition de caoutchouc selon au moins une des revendications précédentes, dans laquelle la résine qui favorise la traction représente la résine qui dérive de la colophane et, de manière facultative, dans laquelle la résine qui dérive de la colophane est hydrogénée au moins en partie.

14. Bandage pneumatique qui possède une bande de roulement circonférentielle en caoutchouc qui est destinée à entrer en contact avec le sol ; dans lequel ladite bande de roulement est constituée d'une composition de caoutchouc selon au moins une des revendications précédentes ou comprend ladite composition.

15. Bandage pneumatique selon la revendication 14, dans lequel la composition de caoutchouc de la bande de roulement est vulcanisée au soufre.
